Europäisches Patentamt

European Patent Office

Office européen des brevets

(19)

(11) Publication number : **0 438 304 A1**

(12) **EUROPEAN PATENT APPLICATION**

(21) Application number : 91300344.8

(22) Date of filing : 17.01.91

(51) Int. Cl.$^5$ : **G11B 11/10**

(30) Priority : 19.01.90 JP 8362/90

(43) Date of publication of application :
24.07.91 Bulletin 91/30

(84) Designated Contracting States :
DE FR GB IT NL

(71) Applicant : CANON KABUSHIKI KAISHA
30-2, 3-chome, Shimomaruko, Ohta-ku
Tokyo (JP)

(72) Inventor : Ishii, Kazuyoshi, c/o Canon
Kabushiki Kaisha
30-2, 3-chome, Shimomaruko
Ohta-ku, Tokyo (JP)

(74) Representative : Beresford, Keith Denis Lewis
et al
BERESFORD & Co. 2-5 Warwick Court High
Holborn
London WC1R 5DJ (GB)

(54) Method and apparatus for recording information onto magneto-optical recording medium.

(57)  A method of recording information onto a magneto-optical recording medium is disclosed. An alternating magnetic field of a predetermined frequency is applied to the magneto-optical recording medium while a plurality of laser beam spots which were modulated in accordance with a recording signal are irradiated on the medium in synchronization with the alternating magnetic field, and whereby recording. The laser beam spots corresponding to levels of the information signal are irradiated to the recording medium at positions which are away from each other by a predetermined distance in a track direction of the medium. A magneto-optical recording apparatus using the above method is also disclosed.

**F I G. 4**

# METHOD AND APPARATUS FOR RECORDING INFORMATION ONTO MAGNETO-OPTICAL RECORDING MEDIUM

## BACKGROUND OF THE INVENTION

### Field of the Invention

The present invention relates to method and apparatus for recording information onto a magneto-optical recording medium.

### Related Background Art

Hitherto, as a memory system for recording information at a high density, there has been known a memory system using a medium (what is called a magneto-optical recording medium) having a recording layer comprising a thin magnetic film made of MnBi or amorphous GdCo, GdFe, DyFe, GdTbFe, TbDyFe, TbFeCo, GdFeCo, GdTbFeCo, or the like. Such a memory is very useful because information can be easily erased.

Hitherto, a light modulating method and a recording magnetic field modulating method have been known as a method of recording information onto a magneto-optical recording medium.

According to the light modulating method, a recording bias magnetic field is applied in a predetermined direction and a light beam modulated by recording information is irradiated onto the recording medium, thereby recording the information. However, in the light modulating method, to rewrite the recorded information on the recording medium, it is necessary to record new information after erasing the recorded information which had already been written. Therefore, there is a drawback such that a recording speed as a memory system is slow. To raise the recording speed, there is also a method whereby an optical head to erase is separately provided for the recording and reproducing apparatus. However, this method has a drawback such that the installation costs remarkably rise.

On the other hand, according to the recording magnetic field modulating method, a non-modulated light beam of a predetermined intensity is irradiated onto a recording medium and a recording magnetic field which was modulated by recording information is applied to the recording medium, thereby recording. Although the above method doesn't have the above drawbacks, in order to raise the recording speed, a modulated magnetic field needs to be applied to the recording medium at a high frequency and at an intensity of hundreds of Oe which is necessary as a recording magnetic field. However, it is extremely difficult to apply such a recording magnetic field by a simple apparatus and an advanced complicated apparatus is needed for this purpose.

As means for solving the above problems, there is a method proposed in JP-A-61-276103.

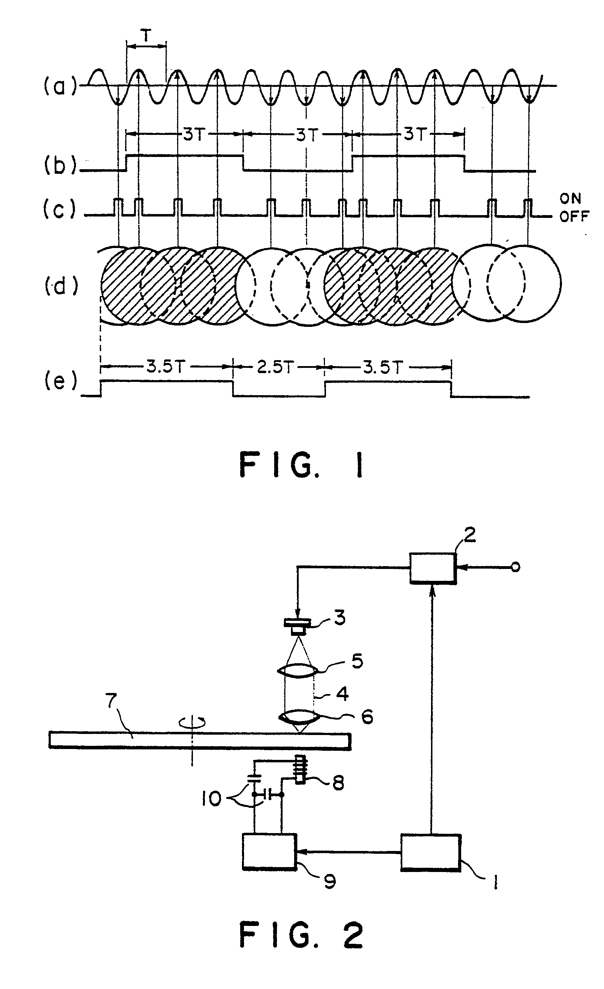

Fig. 1 is a diagrammatical view for explaining the recording principle of such a recording method. Fig. 1 is a diagram showing a state of each signal in the case where a laser beam was irradiated to a magneto-optical recording medium so as to relatively move therefrom with an elapse of time.

In the diagram, (a) denotes an alternating magnetic field of a predetermined period which is applied to the magneto-optical recording medium. (b) indicates a digital encoded information signal to be recorded. Assuming that a period of a channel clock of the information signal is set to T, a length of code is equal to nT (n is an integer). For instance, there is shown a case where a pattern of 3T (high level) - 3T (low level) - 3T (high level) is alternately repeated. A period of alternating magnetic field (a) is selected so as to coincide with T.

(c) shows an example of a modulation signal of a recording laser beam which is irradiated onto the magneto-optical recording medium. The modulation signal (c) is synchronized with the alternating magnetic field (a). On the one hand, if the signal to be recorded shown in (b) is set to the high level, when the magnetic field shown in (a) is upwardly directed, the laser beam is lit on and a pit of the upward magnetization is recorded onto the medium. On the other hand, if the recording signal is set to the low level, when the magnetic field is downwardly directed, the laser beam is lit on and a pit of the downward magnetization is recorded. That is, the modulation signal (c) is fundamentally a pulse-like on/off signal synchronized with one wavelength of the alternating magnetic field (a).

As mentioned above, if the modulation signal of the light beam is synchronized with the alternating magnetic field, they mutually act and the magnetizing direction of the magneto-optical recording medium can be recorded and controlled in a predetermined direction irrespective of the recorded information (magnetizing direction of the magneto-optical recording medium) written on the magneto-optical recording medium. If a frequency of the alternating field (a) is too low, an area in which the magnetizing direction cannot be freely recorded exists on the recording medium, so that such a low frequency is unpreferable. However, by properly selecting the frequency of the alternating magnetic field (a), new information can be recorded (overwritten) onto the recording medium at a high density while erasing the information which has already been written.

(d) shows a state of recording onto the recording medium in the case where both of the alternating magnetic field shown in (a) and the modulation signal of the laser beam shown in (c) where applied to the recording medium. As shown in the diagram, pits which were magnetized upwardly or downwardly are continuously recorded onto the recording medium in accordance with the recording signal. However, in the case where the pits overlap, the magnetization of the pit which was recorded later is left.

A hatched pit indicates a pit recorded by the upward magnetization. A blank pit indicates a pit recorded by the downward magnetization.

In the conventional light modulating method, a point that it is inevitable to erase the previously written recorded information when new information is rewritten is based on a cause such that the direction of the bias magnetic field is set to a predetermined direction. However, according to the above method, since the alternating magnetic field which is synchronized with the modulated light beam and whose direction fluctuates is used as a bias magnetic field, there is no need to erase the written recorded information in order to rewrite and both of the erasure of the recorded information and the rewriting of new information can be concurrently executed.

Fig. 2 is a schematic diagram showing an embodiment of the apparatus of the above recording magnetic field modulating method.

In the apparatus, a laser beam 4 which is emitted from a laser light source 3 is modulated by a recording signal formed by a recording signal modulator 2 synchronously with a reference signal of a predetermined frequency which was formed by a reference oscillator 1. The laser beam 4 emitted from the laser light source 3 passes through a collimating lens 5 and an objective lens 6 and is irradiated onto a magneto-optical recording medium 7. At the same time, a magnetic head 8 arranged at a position which faces the above optical system through the recording medium is driven by a drive circuit 9 at a predetermined frequency formed by the reference oscillator 1. An alternating magnetic field synchronized with (the modulation signal of) the laser beam 4 is applied to the magneto-optical recording medium 7, so that the recording is executed. Reference numeral 10 denotes a capacitor to make a resonance frequency of the recording magnetic head 8 coincide with a reference frequency. The medium 7 is rotated and moved by driving means (not shown) such as a spindle motor and the like relatively for the laser beam.

According to the above method, as shown in Fig. 1, in the case where the signal in which the high and low levels are repeated every length of 3T was recorded onto the medium, the pit (hatched pit) which is recorded by the magnetization in a special direction (in the example, the upward magnetization) is recorded at a timing which is earlier by only a time, that is, 0.5T corresponding to a phase of 180° in the modulation of the magnetic field for the pit (blank pit) which is recorded by the downward magnetization. Thus, as a length of pits which are recorded, the lengths of 3.5T and 2.5T in the upward and downward magnetizing directions are repeated. As a signal to be reproduced, in a manner similar to the above, the lengths of the high and low levels are set to 3.5T and 2.5T, so that the reproduction signal is different from the original signal. Likewise, in the case where the signal of a length of nT (n is an integer) was recorded, the length of signal to be reproduced is equal to (n + 0.5)T for the high level and (n - 0.5)T for the low level. A fact that the lengths between the leading and trailing edges differ from those of the original signal causes a problem of an increase in errors when digital data is recorded and reproduced.

On the other hand, to set a length of reproduction signal to a proper length, there is a problem such that a complicated signal processing circuit is necessary.

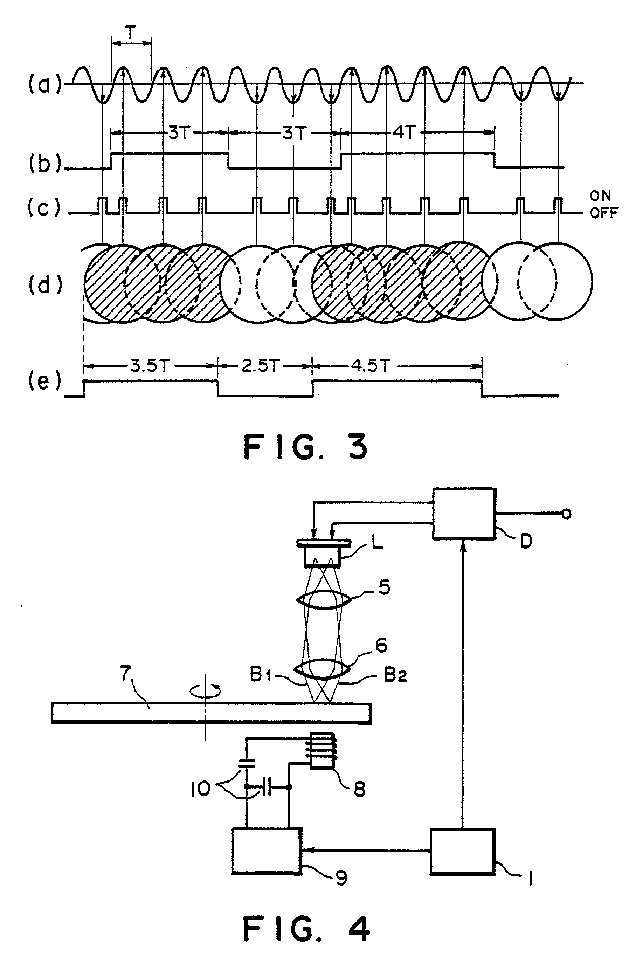

Fig. 3 is a diagram for explaining a state in the case where an information signal of 3T (high level) - 3T (low level) - 4T (high level) was recorded by using the above recording method. Since the recording principle is similar to that of Fig. 1, its description is omitted.

According to the above method, as shown in Fig. 3, in the case where a pattern of 3T (high level) - 3T (low level) - 4T (high level) was recorded on a recording medium, a pit (hatched pitch) which is recorded by the magnetization in a special direction (in the example of Fig. 3, the upward magnetization) is recorded at a timing which is earlier by only a time of 0.5T for a pit (blank pit) which is recorded by the downward magnetization. Thus, a length of pits which are recorded is set to 3.5T (upward magnetization) - 2.5T (downward magnetization) - 4.5T (upward magnetization). A signal to be reproduced is also set to 3.5T (high level) - 2.5T (low level) - 4.5T (high level) and is different from the original signal.

This method is not limited to the above example. In the case where codes of a length of nT (n is an integer) were recorded, a signal which is reproduced is set to (n + 0.5)T for the high level and (n - 0.5)T for the low level.

Generally, in the case where codes in which a period of a channel clock is equal to T were recorded, if the period of alternating magnetic field is set to T/m (m = 1, 2, 3, ...), the codes of a length of nT are reproduced as a length of $(n + \frac{1}{2m})T$ or $(n - \frac{1}{2m})T$.

As mentioned above, a fact that the length of codes which are reproduced differs from that of the original signal causes a problem of an increase in errors upon recording and reproduction of digital data.

## SUMMARY OF THE INVENTION

According to the invention, as means for solving the foregoing problems, there is provided a magneto-optical recording method in which an alternating magnetic field of a predetermined frequency is applied to a magneto-optical recording medium and a laser beam spot which was modulated in accordance with a recording signal synchronously with the alternating field is irradiated to the medium, thereby forming a pattern in a magnetization region onto the magneto-optical recording medium and recording information, wherein two laser beam spots corresponding to the high level and the low level of the recording signal are irradiated onto the magneto-optical recording medium at positions which are away from each other by only a predetermined distance in a recording track direction of the medium, thereby recording information.

On the other hand, the above problems are solved by a magneto-optical recording method whereby two laser beam spots corresponding to magnetic field directions of an alternating magnetic field are irradiated onto a magneto-optical recording medium at positions which are away from each other by only a predetermined distance in the recording track direction of the medium, thereby recording information.

The foregoing problem in the conventional technique occurs when information is recorded onto the medium at a timing of the magnetization in a special direction which is always earlier (or later) than the other magnetization with respect to the time. Therefore, according to the invention, to correct such a time deviation of the recording timings of the pits, the positions of the laser beam spots on the medium are set in a manner such that the beam spot to record a special magnetization is located before or after the beam spot to record the other magnetization by only a proper distance, so that a pit pattern which accurately corresponds to the recording signal is recorded, thereby equalizing the lengths between the leading and trailing edges between the reproduction signal which is reproduced from the pits and the original recording signal. That is, the lengths of codes are equalized between the reproduction signal and the original recording signal.

## BRIEF DESCRIPTION OF THE DRAWINGS

Figs. 1 and 3 are diagrams showing a principle of a conventional magneto-optical recording method ;
Fig. 2 is a diagram showing a construction of a conventional magneto-optical recording apparatus ;
Fig. 4 is a diagram showing a construction of a recording apparatus in an embodiment of a magneto-optical recording method according to the invention ; and
Figs. 5 and 6 are diagrams showing a principle of the magneto-optical recording method according to the invention.

## DETAILED DESCRIPTION OF A PREFERRED EMBODIMENT

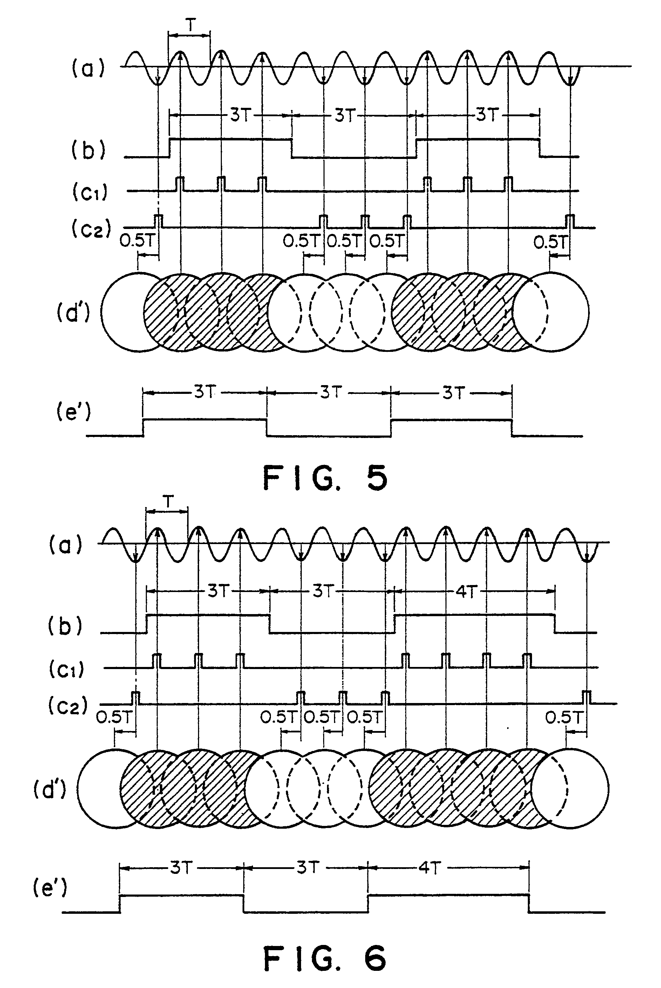

Fig. 4 shows a construction of an embodiment of a recording apparatus of a recording method according to the invention. Fig. 5 shows a diagram showing a principle of the recording method of the invention. In the diagrams, the parts and components as those shown in Figs. 1 and 2 are designated by the same reference numerals and their descriptions are omitted here.

In Fig. 5, the alternating magnetic field (a) and the signal (b) to be recorded are substantially the same as those in the conventional example. As laser beams which are irradiated to a medium, a beam to record the downward magnetization and a beam to record the upward magnetization are individually used. $(c_1)$ denotes a modulation signal of a laser beam to record the upward magnetization. $(c_2)$ indicates a modulation signal of the laser beam to record the downward magnetization. The recording of the upward magnetization is executed at a timing which is earlier by about 0.5T (T is a period of a channel clock of a digital encoded information signal to be recorded) for the recording of the downward magnetization with respect to the time in a manner similar to the conventional example. In this case, the period T of the channel clock of the recording signal is equal to a time corresponding to one period of the alternating magnetic field. However, the laser beam spot to record the downward magnetization is irradiated to a position which is preceding to the laser beam spot to record the upward magnetization by only a distance of 0.5T x V (V denotes a moving velocity of the medium). As mentioned above, if a deviation of the pit position which is caused by a deviation of the recording timing is corrected by previously shifting the position of the laser beam spot, a situation such that lengths of the pits which are recorded differ depending on the magnetizing direction as in the conventional technique is eliminated. As shown in (d'), the pits of a length which accurately corresponds to the recording signal (b) are formed irrespective of the magnetizing direction. Therefore, as shown in (e'), the lengths of the high and low levels of the signal which is reproduced from the recording pits are equal to 3T and are accurately equal to those of the recording signal (b).

On the other hand, the above example has been shown with respect to the case where the recording signal is regularly repeated such that 3T is provided for the high level and 3T is provided for the low level. However, according to the method, a similar effect is also obtained with respect to the recording of irregular data of a length of nT (n is an integer).

A construction of a recording apparatus to embody the invention will now be described with reference to Fig. 4.

In the diagram, a laser light source L is, for instance, a laser array in which two laser oscillators are closely arranged on one semiconductor substrate or a light source in which two laser oscillators are closely arranged in one package. Laser beams $B_1$ and $B_2$ which are emitted from the laser light source L and used to record the upward magnetization and the downward magnetization are respectively modulated by a modulation signal which is formed by a recording signal modulator D and are irradiated onto the medium 7. The medium 7 is relatively moved for the beams $B_1$ and $B_2$ by driving means (not shown).

On the medium 7, the beam spots are away from each other in the recording track direction of the medium by only a distance of $0.5T \times V$ (V is a moving velocity of the medium) and are arranged in a manner such that the spot of the laser beam $B_2$ is located before the spot of the laser beam $B_1$ in the recording direction. Therefore, as described in Fig. 5, a recording pit pattern which accurately corresponds to the recording signal can be recorded.

On the other hand, Fig. 6 shows the case where the recording signal (b) of 3T (high level) - 3T (low level) - 4T (high level) was recorded by the above method. As shown in the diagram, a recording pit pattern which accurately corresponds to the recording signal can be recorded.

According to the method, a similar effect is derived with respect to the recording of codes in which a period of a channel clock is equal to T, that is, an information signal of an arbitrary pattern in which a length of codes is equal to nT (n is an integer).

On the other hand, generally by selecting a period of a modulation magnetic field so as to become T/m (m = 1, 2, 3, ...), it is sufficient that the laser beam spot to record the upward (or downward) magnetization is irradiated to a position which is preceding by only a distance of $\frac{T}{2m} \times V$ (V is a moving linear velocity of the recording medium) for the laser beam spot to record the downward (or upward) magnetization.

As described above, according to the magneto-optical recording method of the invention, even in the case of using a method of recording a signal by an alternating magnetic field of a predetermined frequency and a laser pulse synchronized therewith, the length of pits and the length between the leading and trailing edges of the reproduction signal which is reproduced from the pits can be equalized with those of the original recording signal without needing a complicated signal processing circuit. Therefore, even in the recording and reproduction of digital data, there is an advantage such that an amount of errors which are generated can be reduced and the signal can be easily overwritten.

## Claims

1. A method of recording information onto a magneto-optical recording medium, wherein an alternating magnetic field of a predetermined frequency is applied to the magneto-optical recording medium and a plurality of laser beam spots which were modulated in accordance with a recording signal are irradiated onto the medium synchronously with the alternating magnetic field, thereby recording.

2. A method according to claim 1, wherein two laser beam spots corresponding to levels of the information signal are irradiated to the recording medium at positions which are away from each other by a predetermined distance in a track direction of the medium.

3. A magneto-optical recording apparatus comprising :
   a magnetic head for applying an alternating magnetic field of a predetermined period to a magneto-optical recording medium ;
   an optical head for irradiating a plurality of laser beam spots to the magneto-optical recording medium ; and
   moving means for relatively moving the recording medium and said plurality of laser beam spots.

4. A magneto-optical recording apparatus comprising means for generating a periodically modulated magnetic bias and means responsive to a signal to be recorded for generating a modulated thermal beam synchronised with said periodic variation, so as to be capable of producing corresponding recorded bit areas on a medium movably mounted in the apparatus, characterised in that the apparatus is such that the bit areas produced by different signal types (e.g. "mark" and "space") are of equal extent.

5. A magneto-optical recording apparatus comprising optical head means for applying, in response to a signal, a thermal beam to a recording medium moved relative to the apparatus, characterised in that the optical head means is such as to apply said beam to at least two points separated in the direction of movement of the medium, relative to the apparatus, the point to which the beam is applied depending upon the type of signal to be recorded (e.g. "mark"/"space").

6. A method of recording information onto a magneto-optical recording medium travelling relative to recording apparatus which includes an alternating magnetic field of a predetermined periodicity, which method comprises: selectively irradiating an area of the medium at a time corresponding to a magnetic field polarity which corresponds to the desired binary bit, characterised in that the point at which the irradiation is applied is selected from two different points along the direction of travel depending upon the identity of the bit to be recorded.

7. A magneto-optical recording apparatus comprising two data writing optical heads displaced one from another.

8. A method of recording data on a moving medium in which data recording signals are applied to said medium at unequal time intervals, characterised in that said signals are applied to said medium in uneven spacial intervals, said time intervals and spacial intervals being such that the extent in the direction of travel of recorded data of different types on said medium are the same irrespective of data type.

9. Apparatus for recording data of different types on a travelling medium by applying a recording signal at unequal time intervals to said medium, characterised in that the recording pulses applied at uneven spacial intervals which are such as to equalise the extent in the direction of travel of said recorded data of different types of said medium.

F I G. 1

F I G. 2

F I G. 3

F I G. 4

F I G. 5

F I G. 6

9

European Patent
Office

**EUROPEAN SEARCH REPORT**

Application Number

| | DOCUMENTS CONSIDERED TO BE RELEVANT | | EP 91300344.8 |
|---|---|---|---|
| **Category** | **Citation of document with indication, where appropriate, of relevant passages** | **Relevant to claim** | **CLASSIFICATION OF THE APPLICATION (Int. Cl.5)** |
| X | PATENT ABSTRACTS OF JAPAN, unexamined applications, P field, vol. 13, no. 212, May 18, 1989 THE PATENT OFFICE JAPANES GOVERNMENT page 122 P 873 | 1-3 | G 11 B 11/10 |
| A | * Kokai-no. 1-30 042 MATSUSHITA ELECTRIC IND. CO. LTD.) *<br>— | 4-9 | |
| X | PATENT ABSTRACTS OF JAPAN, unexamined applications, P field, vol. 13, no. 322, July 20, 1989 THE PATENT OFFICE JAPANESE GOVERNMENT page 90 P 902 | 1-3 | |
| A | * Kokai-no. 1-89 055 (BROTHER IND. LTD.) *<br>— | 4-9 | **TECHNICAL FIELDS SEARCHED (Int. Cl.5)** |
| X | PATENT ABSTRACTS OF JAPAN, unexamined applications, P field, vol. 13, no. 440, October 4, 1989 THE PATENT OFFICE JAPANESE GOVERNMENT page 150 P 940 | 1-3 | G 11 B 11/00<br>G 11 B 13/00<br>G 11 B 5/00<br>G 11 B 7/00 |
| A | * Kokai-no. 1-169 762 (NEC HOME ELECTRONIC LTD.) *<br>———— | 4-9 | |

The present search report has been drawn up for all claims

| Place of search | Date of completion of the search | Examiner |
|---|---|---|
| VIENNA | 20-03-1991 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................
& : member of the same patent family, corresponding document

EPO FORM 1503 03.82 (P0401)